# EUROPÄISCHE PATENTSCHRIFT

(11) **EP 2 823 018 B1**
(45) Veröffentlichungstag und Bekanntmachung des Hinweises auf die Patenterteilung: **21.02.2018**
(21) Anmeldenummer: 12818486.8
(22) Anmeldetag: 21.12.2012
(51) Int. Cl.: C09K 21/10, C08K 5/3492, C08K 7/28, C08K 9/04, C03C 11/00

(54) **FLAMMSCHUTZMITTELZUSAMMENSETZUNG FÜR THERMOPLASTISCHE POLYMERE BESTEHEND AUS PORÖSEM, AMORPHEN GLASPULVER UND MELAMINCYANURAT**
FLAME RETARDANT COMPOSITION FOR THERMOPLASTIC POLYMERS CONSISTING OF POROUS, AMORPHOUS GLASS POWDER AND MELAMINE CYANURATE
COMPOSITION D'AGENT IGNIFUGE POUR POLYMÈRES THERMOPLASTIQUES, À BASE DE POUDRE DE VERRE AMORPHE POREUX ET DE CYANURATE DE MÉLAMINE

(30) Priorität: 07.03.2012 DE 102012004357
(43) Veröffentlichungstag der Anmeldung: 14.01.2015
(73) Patentinhaber: Trovotech GmbH, 06766 Wolfen (DE)
(72) Erfinder: VOSS, Hans-Jürgen, 79279 Vörstetten (DE); FERNER, Uwe, 06766 Bitterfeld-Wolfen OT Bobbau (DE)
(74) Vertreter: Köhler, Tobias
(86) Internationale Anmeldenummer: PCT/EP2012/005330
(87) Internationale Veröffentlichungsnummer: WO 2013/131545

(56) Entgegenhaltungen:
- DE-A1- 19 532 720
- DE-B4- 10 252 693

## Beschreibung

Die Erfindung betrifft eine Flammschutzmittelzusammensetzung für thermoplastische Formmassen.

Weiter betrifft die Erfindung Formkörper, Fasern oder Folien, herstellbar aus den erfindungsgemäßen flammgeschützten Formmassen.

Als Flammschutzmittel für thermoplastische Formmassen werden aktuell vor allem folgende Stoffgruppen eingesetzt:
1. Anorganische Verbindungen, zumeist Hydroxide, wie Aluminiumtrihydroxid und Magnesiumhydroxid, wobei dann sehr große Mengen von meist über 50 % eingesetzt werden müssen und die mechanischen Eigenschaften der Formmassen sehr negativ beeinflusst werden. Zudem beginnt sich Aluminiumtrihydroxid bereits bei 200 °C zu zersetzen, was die Einsatzmöglichkeiten stark einschränkt, da einige Thermoplasten bei Temperaturen über 200 °C verarbeitet werden.
2. Halogenierte (bromierte und chlorierte) Flammschutzmittel, wobei im Brandfall Dioxine entstehen können und deshalb viele dieser Verbindungen nach EU-Chemikalienverordnung verboten sind.
3. Halogenierte Phosphorverbindungen, aus denen ebenfalls im Brandfall Dioxine entstehen können.
4. Nichthalogenierte Phosphorverbindungen, einschließlich roten Phosphors. Einige der Phosphorverbindungen, wie Ammoniumpolyphosphate und Melaminphosphate, sind bei Temperaturen > 200 °C ebenfalls nicht thermostabil. Andere Phosphorverbindungen wie Triphenylphosphinoxid wirken in vielen Thermoplasten als Weichmacher. Roter Phosphor ist besonders in Thermoplasten mit einem hohen Feuchtegehalt, z.B. PA 6, sehr wirksam. Hohe Verarbeitungstemperaturen der Thermoplasten können jedoch zur Bildung des giftigen Gases Phosphin führen.
5. Stickstoffbasierte Flammschutzmittel, wie Melamin, Melaminderivate (u. a. Melamincyanurat) und Melaminhomologe.

Nachteilig dabei ist, dass Melamin aus der Polymermatrix der damit ausgerüsteten Kunststoffe diffundiert. Melamincyanurta, das Salz aus der Reaktion von Melamin mit Cyanursäure, hingegen diffundiert kaum aus den Kunststoffen. Ursache ist die zweidimensionale, auf Wasserstoffbrückenbindungen beruhende Netzwerkstruktur des Melam incya nu rats.

Daraus resultiert jedoch auch ein großer Nachteil des Melamincyanurats.

Es neigt bei der Einarbeitung in Polymere zur Bildung von größeren Agglomeraten bzw. zur Kompaktierung bereits bei der Dosierung. Die Dispergierung in technischen Kunststoffen ist schwierig.

Die Agglomerate des Melamincyanurats in den Polymeren haben negative Auswirkungen auf die mechanischen Eigenschaften und das Brandverhalten. In der Vergangenheit wurden mehrere Versuche unternommen, die Dispergierung zu verbessern. Außerdem wird durch Einsatz von Melamincyanurat zumeist nur in unverstärkten Thermoplasten eine gute Flammschutzwirkung erreicht.

Besonders bei faserverstärkten Polyamiden tritt der so genannte Dochteffekt auf, das heißt der faserverstärkte Polyamidprüfstab brennt bedingt durch die enthaltenen Fasern weiter.

In der DE 102007037019A1, wie auch in weiteren Schriften des gleichen Verfassers, wird der Einsatz von Phospinsäure oder Phosphinsäuresalzen als Flammschutzmittel in Polyamid beansprucht.

In der DE 4307682A1 wird eine flammgeschützte thermoplastische Formmasse beansprucht, bestehend aus Polyamid, Melamincyanurat, Magnesiumhydroxid sowie weiteren Füll- und Zusatzstoffen. Der Flammschutz soll dabei durch die Kombination der bekannten Flammschutzmittel Melamincyanurat und Magnesiumhydroxid erreicht werden. Es wurden 15 Gewichtsprozent Melamincyanurat bzw. 10 Gewichtsprozent Melamincyanurat in Kombination mit 15 Gewichtsprozent Magnesiumhydroxid eingesetzt, um den Flammschutz zu erreichen.

In der DE 10144231B4 wird ein Verfahren zur Beschichtung von Melamincyanurat beschrieben, bei dem das Melamincyanurat in Lösung mit Monomeren, Oligomeren und/oder Polymeren auf Basis von Lactamen vermischt wird. Nachteilig ist, dass die Vermischung im wässrigen Milieu erfolgen muss und anschließend Filtration und Trocknung erforderlich sind.

In der DE 60029009T2 wird eine flammhemmende Polyamidharzzusammensetzung bestehend aus Polyamidharz, einem Gemisch aus Polyphosphorsäure und Melamin sowie organischen Füllstoffen beansprucht. Dabei handelt es sich um eine Kombination aus zwei bekannten Stoffen zum Flammschutz von Polyamiden.

In der DE 19532720A1 wird eine flammgeschütze thermoplastische Formmasse beansprucht, die aus Polyamid, Melamincyanurat, mit Silanverbindungen vorbehandelten faserförmigen Füllstoffen sowie weiteren Zusatzstoffen und Verarbeitungshilfsmitteln besteht. In dem dort aufgeführten Beispiel werden 15 Gewichtsprozent Melamincyanurat eingesetzt um in der Brandprüfung die Brandklasse UL 94-V2 zu erreichen.

In der DE 10236081A1 wird ein Polyamid ausgerüstet mit 10 bis 25 % Melamincyanurat beansprucht, dass zusätzlich 0,5 bis 2,0 % Aminosilan zur besseren Verteilung des Melamincyanurats enthält.

In den Patentschriften DE 195 36 665 C2, DE 195 36 666 C2, DE 195 45 065 C2 und DE 102 52 693 B4 wird die Herstellung von Glaspartikeln aus kontinuierlich im Extruder erzeugtem Glasschaum beschrieben. Diese Glaspartikel werden im Weiteren als poröse amorphe Glaspartikel bezeichnet.

Aufgabe der Erfindung ist es, ein einfach herstellbares Flammschutzkonzentrat bzw. ein Masterbatch vorzuschlagen, welches verbesserte flammhemmende Eigenschaften in thermoplastischen Polymeren gewährleistet, mit einer geringen Konzentration eingesetzt werden kann, gut in thermoplastischen Formmassen dispergiert werden kann und zu guten physikalischen insbesondere mechanischen Eigenschaften der Formmassen führt, indem nur geringe Mengen eingesetzt werden müssen.

Zur Lösung dieser Aufgabe wird eine Flammschutzmittelzusammensetzung für thermoplastische Formmassen gemäß Anspruch 1 sowie entsprechende Verwendungen gemäß Anspruch 4 vorgeschlagen.

Es wird ein Flammschutzmittel für thermoplastische Formmassen vorgeschlagen, welches aus 30 bis 70 Gewichtsprozent Melamincyanurat und aus 30 bis 70 Gewichtsprozent poröser amorpher Glaspartikel, hergestellt aus im Hochtemperaturextruder kontinuierlich erzeugtem Glasschaum, besteht, wobei die Summe der Komponenten 100 Gewichtsprozent beträgt.

Mit dem erfindungsgemäßen Gemisch aus Melamincyanurat und amorphen porösen Glaspartikeln ausgerüstete thermoplastische Formmassen sind ebenfalls dem Gegenstand der vorliegenden Erfindung zu zurechnen.

Die Formmassen enthalten 30 bis 95 Gewichtsprozent eines oder mehrerer thermoplastischer Polymere, 1 bis 20 Gewichtsprozent des Gemisches aus Melamincyanurat und den amorphen porösen Glaspartikeln, bevorzugt 2 bis 15 Gewichtsprozentes diesen Gemisches, besonders bevorzugt 5 bis 12 Gewichtsprozent dieses Gemisches, 0 bis 70 Gewichtsprozent Füll- und Verstärkungsstoffe sowie 0 bis 50 Gewichtsprozent weiterer Hilfsstoffe, wobei die Summe der Komponenten 100 Gewichtsprozent betragen soll.

Weiterer Gegenstand der Erfindung sind Formkörper, Fasern und Folien, herstellbar aus den erfindungsgemäßen thermoplastischen Formmassen.

Das beanspruchte Flammschutzmittel für die thermoplastischen Formmassen kann auch als Masterbatch, also ein Compound mit hoher Konzentration des Flammschutzmittels, in die thermoplastischen Formmassen eingebracht werden. Dieser Masterbatch kann weitere Hilfsstoffe wie Weichmacher, Nukleierungsmittel, Entformungs- und Gleitmittel, Fließ- und Verarbeitungshilfsmittel, Antioxidantien, Hitze- und Lichtstabilisatoren, Farbstoffe, Pigmente und weitere Flammschutzmittel enthalten.

Ebenso können die zuvor aufgeführten Hilfsstoffe auch direkt in die thermoplastischen Formmassen eingebracht werden.

Den thermoplastischen Formmassen können auch Füll- und Verstärkungsstoffe wie Feldspat, Glimmer, Talkum, Quarz, Silikate, amorphe Kieselsäure, Magnesiumcarbonat, Bariumsulfat, Kohlenstofffasern, Aramidfasern, Kaliumtitanatfasern, Naturfasern, Glasfasern (Kurzfasern, Langfasern oder Endlosfasern), Glaskugeln, Glasgewebe, Glasmatten, Kaolin, Titandioxid, Calciumsilikate wie Wollastonit, u. a. zugesetzt werden, wobei die Füll- und Verstärkungsstoffe auch oberflächenbehandelt sein können.

Thermoplastische Formmassen im Sinne der Erfindung, die mit der Flammschutzzusammensetzung ausgerüstet werden können, sind Homo- und Copolymere von olefinisch ungesättigten Monomeren wie Polyfluorethylen, Polyethylen, Polypropylen, Ethylene/Propylen-Copolymere, Polystyrole, Styrol/Acrylnitril-Copolymere, ABS-Copolymere, Vinylchlorid Homo- und Copolymere, Polyacrylate, Vinylacetat-Copolymere wie Ethylenvinylacetat, Polyacetate, Polycarbonate, Polyester und besonders Polyamide. Ebenso können es Compounds aus zwei oder mehreren der thermoplastischen Formmassen sein.

Als Komponenten können die erfindungsgemäßen thermoplastischen Formmassen auch kautschukelastische Polymerisate enthalten. Bevorzugt sind hier die so genannten Ethylen-Propylen- bzw. Ethylen-Propylen-Dien-Kautschuke (EPM- und EPDM-Kautschuk) zu nennen. Die EPD- und EPDM-Kautschuke können vorzugsweise auch mit reaktiven Carbonsäuren oder deren Derivaten gepfropft sein.

Die Polyamidharze können durch Polykondensation von Lactamen mit 3- oder mehrgliedrigem Ring oder von polymerisierbaren Aminosäuren oder durch Polykondensation zwischen dibasischen Säuren und Diaminen erhalten werden. Beispiele der Polyamide sind Polymere von ε-Caprolactam, Aminocapronsäure, β-Lactam, γ-Lactam, δ-Lactam, ε-Lactam, 7-Aminoheptansäure, 11-Aminodecansäure, Pyridin, Piperidon und dergleichen, erzeugt durch die Polykondensation zwischen Diaminen wie Hexamethylen- Nonamethylen-, Undecamethylen-, Dodecamethylen-, m-Xylylendiamin und Dicarbonsäuren wie Terephthal-, Isophthal-, Adipin-, Sebacin-, Dodecandicarbon- und Glutarsäure oder Copolymere davon. Spezifische Beispiele der Polyamide sind Polyamid 4, Polyamid 6, Polyamid 7, Polyamid 8, Polyamid 11, Polyamid 12, Polyamid 6.6, Polyamid 6.9, Polyamid 6.10, Polyamid 6.11, Polyamid 6.12, Polyamid 6T, Polyamid 6/6.6, Polyamid 6/12, Polyamid 6/6T und Polyamid 6I/6T ohne weitere auszuschließen.

Besonders bevorzugt sind Polyamid 6 und Polyamid 6.6 sowie Mischungen daraus.

Die porösen amorphen Glaspartikel werden aus Glasschaum hergestellt. Dazu wird die Glasschmelze in einem Hochtemperaturextruder (Einschneckenextruder) bei rund 1000°C mit Wasserdampf als Treibmittel unter Druck vermischt.

Bei der anschließenden Entspannung des Gemisches an der Extruderaustrittsdüse entsteht ein feinporiger Glasschaum mit einer Dichte von 0,05 bis 0,30 g/cm³, bevorzugt 0,8 bis 0,15 g/cm³.

Der Glasschaumstrang wird nicht entspannt und kühlt innerhalb weniger Sekunden auf Temperaturen unter 50 °C ab.

Er besteht aus geschlossenen Poren, die jedoch in Folge der schnellen Abkühlung zumeist aufbrechen.

Ebenso zerfällt der Glasschaumstrang in unregelmäßige Bruchstücke. Im Weiteren werden die unregelmäßigen Bruchstücke in einem Walzenbrecher mit 7-mm-Lochsieb vorzerkleinert. Anschließend erfolgt die Mahlung (Kugelmühle) und Klassierung (Windradsichter) der vorgebrochenen Schaumglasstücke auf entsprechende Partikelgrößen, wobei eine mittlere Partikelgröße (d₅₀) zwischen 1 und 100 µm, bevorzugt zwischen 2 und 6 µm, eingestellt wird.

Für den Einsatz in den Flammschutzmischungen wird Borosilikatglas verwendet. Borosilikatglas weist eine gute hydrolytische Beständigkeit auf, einen geringeren Wärmeausdehnungskoeffizienten als Kalk-Natron-Glas und ist inert gegenüber den thermoplastischen Formmassen.

Durch die starke Abkühlung des Glasschaums und den Mahlprozess entstehen poröse amorphe Glaspartikel mit einer speziellen Oberfläche.

Borosilikatglaspartikel mit der oben aufgeführten Zusammensetzung und einer durchschnittlichen Partikelgröße von 3,0 µm sintern bereits bei einer Temperaturbehandlung im Bereich von 360 bis 400 °C zusammen. Dieses Verhalten wurde als Ansatz für die Entwicklung von Flammschutzmitteln, die diese porösen amorphen Glaspartikel enthalten, genutzt.

Melamincyanurat ist ein Reaktionsprodukt aus vorzugsweise äquimolaren Mengen von Melamin und Cyanursäure bzw. Isocyanursäure.

Es wird beispielsweise erhalten durch Umsetzung von wässrigen Lösungen der Ausgangsprodukte bei 90 bis 100 °C. Das gehandelte Produkt ist ein weißes Pulver mit einer mittleren Teilchengröße (d₅₀) zwischen 1,0 und 100,0 µm.

Als Melamincyanurat sind im Rahmen dieser Anmeldung sämtliche handelsüblichen und kommerziell verfügbaren festen und bevorzugt partikelförmigen Produktqualitäten zu betrachten. Die bevorzugte mittlere Teilchengröße der Melaminpartikel liegt zwischen 1,0 und 10,0 µm.

Das Melamincyanurat kann jedoch auch aus Melamin und Cyanursäure bzw. Isocyanursäure in Anwesenheit der amorphen porösen Glaspartikel hergestellt werden.

Dazu können Melamin und Cyanursäure bzw. Isocyanursäure im Molverhältnis von 1,0 zu 0,5 bis 1,0 zu 1,5 bzw. 0,5 zu 1,0 bis 1,5 zu 1,0 eingesetzt werden. Es werden jedoch äquimolare Mischungsverhältnisse bevorzugt. Melamin und Cyanursäure bzw. Isocyanursäure werden dabei in einem wässrigen Medium bei einer Temperatur von 70 und 100 °C, bevorzugt 90 bis 100 °C, zunächst separat aufgelöst und dann zusammen mit den amorphen porösen Glaspartikeln bei einer Temperatur von 70 bis 100 °C, bevorzugt 90 bis 100 °C vermischt.

Anschließend kann durch bekannte Trenntechniken wie Filtration oder Zentrifugation das Gemisch aus Melamincyanurat und porösen amorphen Glaspartikeln abgetrennt werden. Mittels üblicher Trocknungstechniken, vorzugsweise bei Temperaturen bis maximal 100 °C, kann noch vorhandenes Wasser abgetrennt werden.

Die vorliegende Erfindung betrifft auch die Verwendung derartiger Formmassen zur Herstellung von Formkörpern, Fasern und Folien sowie die hierbei erhältlichen Formkörper jeder Art.

Die vorliegende Erfindung soll anhand eines folgenden, in Versuchsreihen nachgewiesenen Beispieles näher erläutert werden.

Aus einem Borosilikatglas mit der in Tabelle 1 angegebenen chemischen Zusammensetzung wurde unter Einsatz von Wasserdampf als Treibmittel im Einschneckenextruder bei einer Schmelzetemperatur von 930 °C Glasschaum hergestellt.

Die Transformationstemperatur der oben aufgeführten Glaszusammensetzung beträgt rund 534 °C.

Anschließend erfolgt eine Vorzerkleinerung des Glasschaums in einem Walzenbrecher auf Glasschaumpartikel ≤ 7 mm. In einem anschließenden kombinierten Mahl- und Sichtungsprozess (Kugelmühle und Windradsichter) erfolgt die Zerkleinerung auf eine mittlere Partikelgröße von 2,8 µm (Partikelgrößenverteilung: d₁₀ = 0,7 µm; d₂₅ = 1,2 µm; d₅₀ = 1,8 µm; d₇₅ = 2,8 µm; d₉₀ = 4,1 µm und d₉₉ = 8,6 µm).

Aus den Rohstoffen Melamincyanurat (Typ NORD-MIN MC-25J; Liefrant Nordmann, Rassmann GmbH), den porösen amorphen Glaspartikeln und Polyamid 6 (Hersteller: Radici, relative Viskosität 2,69, gemessen in 96-%-iger H₂SO₄ als 0,5 %-ige Lösung bei 25 °C nach DIN ISO 307; Monomergehalt 0,08 %; Feuchtegehalt 190 ppm; Gesamtextrakt: 0.82 %) wurde ein Masterbatch hergestellt, der 40 Gewichtsprozent Melamincyanurat, 40 Gewichtsprozent poröse amorphe Glaspartikel und 20 Gewichtsprozent PA 6 enthielt.

Aus den Ausgangsstoffen Polyamid 6 und dem Masterbatch wurden in einer Versuchsreihe drei Mischungen unterschiedlicher Zusammensetzung hergestellt:
Mischung A - bestehend aus 8 Gewichtsprozent Masterbatch und 92 Gewichtsprozent PA 6.
Mischung B bestehend aus 10 Gewichtsprozent Masterbatch und 90 Gewichtsprozent PA 6.
Mischung C bestehend aus 20 Gewichtsprozent Masterbatch und 80 Gewichtsprozent PA 6.

Anschließend wurden diese Mischungen 5 Stunden bei 80 °C getrocknet, wodurch Restfeuchten < 0,09 % erreicht wurden.

Die Komponenten wurden bei einer Zylindertemperatur von 260 bis 280 °C in einem Doppelschneckenextruder ZSK 32 (Hersteller Werner und Pfleiderer) verarbeitet.

Es wurden Normprüfkörper für die Flammschutzprüfung nach UL 94V der folgenden Abmessungen hergestellt: 125 mm x 13 mm x 0,8 mm.

Zum Vergleich wurde eine kommerzielle Polyamid-Flammschutzausrüstung, bezeichnet als PA-Funaden-Flammhemmer, der Firma Grafe Masterbatch GmbH, ebenfalls mit dem PA 6 aus Beispiel 2 vermischt. Dazu wurden 90 Gewichtsprozent PA 6 mit 10 Gewichtsprozent PA-Funaden-Flammhemmer vermischt und ebenfalls getrocknet. Aus dieser Mischung wurden ebenfalls Normprüfkörper für die Flammschutzprüfung nach UL 94V hergestellt.

Alle vorgenannten Normprüfkörper wurden 48 h vor Beginn der Brandschutzprüfung im Normalklima 23/50 Klasse 1 nach DIN EN ISO 291 gelagert.

Das Brandverhalten wurde nach UL 94V ("Tests for Flammability of Plastic Materials for Parts in Devices and Applications" der Unterwriter Laboratories Inc., inzwischen auch übernommen als DIN EN 60695-11-10) geprüft. Bei diesem Verfahren wird der vertikal angeordnete Prüfkörper mit einem Bunsenbrenner mit einer Flammhöhe von 20 ± 1 mm jeweils 10 s beflammt. Brenndauer und Gesamtbrennzeit sowie brennend abfallende Teile sind die Beurteilungsparameter.

Für die Einstufung eines flammgeschützten Kunststoffs Brandklasse UL 94V-O müssen die folgenden Kriterien erfüllt sein:
- Bei einem Satz von 5 Normprüfkörpern (Abmessungen 125 x 13 x s, mit s = 0,8 bis 13 mm) dürfen alle Proben nach zweimaliger Beflammung von 10 Sekunden Dauer mit einer offenen Flamme von 20 mm Höhe nicht länger als 10 Sekunden nachbrennen.
- Die Summe der Nachbrennzeiten bei 10 Beflammungen von 5 Probekörpern darf nicht größer als 50 s sein.
- Es darf kein brennendes Abtropfen, vollständiges Abbrennen oder Nachglühen der Prüfkörper von mehr als 30 Sekunden erfolgen.
- Die unter dem Probekörper angeordnete Watte darf sich nicht entzünden.

Für die Einstufung UL 94V-1 darf die Einzelnachbrennzeit nicht mehr als 60 Sekunden betragen und die Summe der Nachbrennzeiten der 10 Beflammungen der 5 Prüfkörper darf nicht mehr als 250 Sekunden betragen. Außerdem dürfen alle Prüfkörper bei der Beflammung nicht länger als 30 Sekunden nachbrennen. Die übrigen Kriterien sind mit der Einstufung UL 94V-O identisch.

Die Einstufung in die Brandklasse UL 94V-2 erlaubt zusätzlich zu den Vorgaben der Brandklasse UL 94V-1 das Brennen der Watte.

Bei der Vergleichsprobe mit 10 Gewichtsprozenten PA-Funaden-Flammhemmer konnte die Brandklasse UL 94V-2 erreicht werden. Bei Einsatz von 8 Gewichtsprozenten des Flammschutz-Masterbatch aus Melamincyanurat, porösen Borosilkatglaspartikeln und den Polyamid 6 wurde in den Flammversuchen ebenfalls die Brandklasse UL 94V-2 erreicht. Bei diesen beiden Proben lag die Summe der Nachbrennzeiten zwar unter 50 s für 10 Beflammungen, jedoch brannte die unter den beflammten Proben angeordnete Watte bei einigen Beflammungen. Wurden hingegen 10 Gewichtsprozente des Flammschutz-Masterbatch eingesetzt, so konnte bereits die Brandklasse UL 94V-0 erreicht werden. Auch bei dieser Probe lag die Summe der Nachbrennzeiten mit 8,7 Sekunden deutlich unter den für die Einstufung V0 vorgegebenen Maximalwert von 50 s. Die unter den Proben angeordnete Watte entzündete sich in diesem Fall jedoch nicht. Bei dieser Probe wurde somit nur 4 Gewichtsprozent Melamincyanurat und 4 Gewichtsprozent des porösen Glaspulvers eingesetzt.

Die weiteren Ergebnisse der Flammversuche nach UL 94V für die verschiedenen Mischungen sind in den Tabellen 2 bis 5 aufgeführt.

**Tabelle 1: Chemische Zusammensetzung Borosilikatglas**

| Oxide | Borosilikatglas |
|---|---|
| SiO₂ [Ma.-%] | 55,0 - 60,0 |
| Na₂O [Ma.-%] | 9,5 - 13,5 |
| K₂O [Ma.-%] | 1,0 - 4,0 |
| CaO [Ma.-%] | 1,0 - 5,0 |
| MgO [Ma.-%] | 0 - 2,0 |
| BaO [Ma.-%] | 3,0 - 6,0 |
| ZnO [Ma.-%] | 3,0 - 5,0 |
| B₂O₃ [Ma.-%] | 8,0 - 11,0 |
| Al₂O₃ [Ma.-%] | 4,0 - 7,0 |
| Fe₂O₃ [Ma.-%] | < 0,2 |
| F₂ [Ma.-%] | < 1,0 |

**Tabelle 2: Vergleichsmischung mit 10 Gewichtsprozent PA-Funaden-Flammhemmer**

| **Stab Nr.** | **Dicke [mm]** | **t₁ [s]** | **Watte Brennt** | **t₂ [s]** | **Watte brennt** | **Klassifizi e-rung** |
|---|---|---|---|---|---|---|
| 1 | 0,80 | 1,9 | nein | 1,7 | nein | 94 V-2 |
| 2 | 0,80 | 1,2 | ja | 0,8 | --- | |
| 3 | 0,80 | 1,0 | nein | 0,9 | nein | |
| 4 | 0,80 | 0,8 | nein | 0,8 | ja | |
| 5 | 0,80 | 1,3 | nein | 1,5 | nein | |
| 6 | 0,80 | 0,9 | nein | 1,4 | nein | 94 V-2 |
| 7 | 0,80 | 1,2 | nein | 0,7 | nein | |
| 8 | 0,80 | 0,9 | nein | 0,8 | nein | |
| 9 | 0,80 | 0,9 | nein | 1,4 | Ja | |
| 10 | 0,80 | 1,3 | nein | 1,4 | nein | |

| | | | | | | |
|---|---|---|---|---|---|---|
| Die Proben tropfen brennend ab. | | | | | | |

**Tabelle 3: Mischung A aus 92 Gewichtsprozent PA 6 und 8 Gewichtsprozent Melamincyanurat-Glaspulver-Flammhemmer-Masterbatch**

| **Stab Nr.** | **Dicke** [**mm**] | **t₁ [s]** | **Watte brennt** | **t₂ [s]** | **Watte brennt** | **Klassifizie rung** |
|---|---|---|---|---|---|---|
| 1 | 0,80 | 1,0 | ja | 0,7 | nein | 94 V-2 |
| 2 | 0,80 | 1,0 | ja | 0,9 | ja | |
| 3 | 0,80 | 0,9 | ja | 0,8 | ja | |
| 4 | 0,80 | 0,7 | ja | 1,4 | ja | |
| 5 | 0,80 | 0,8 | ja | 0,7 | nein | |

| | | | | | | |
|---|---|---|---|---|---|---|
| Die Proben tropfen brennend ab. | | | | | | |

**Tabelle 4: Mischung B aus 90 Gewichtsprozent PA 6 und 10 Gewichtsprozent Melamincyanurat-Glaspulver-Flammhemmer-Masterbatch**

| **Stab Nr.** | **Dicke [mm]** | **t₁ [s]** | **Watte brennt** | **t₂ [s]** | **Watte brennt** | **Klassifizie rung** |
|---|---|---|---|---|---|---|
| 1 | 0,80 | 0,8 | nein | 0,8 | nein | 94 V-0 |
| 2 | 0,80 | 0,5 | nein | 0,8 | nein | |
| 3 | 0,80 | 0,6 | nein | 1,4 | nein | |
| 4 | 0,80 | 0,8 | nein | 0,5 | nein | |
| 5 | 0,80 | 0,6 | nein | 0,3 | nein | |

| | | | | | | |
|---|---|---|---|---|---|---|
| Die Proben tropfen brennend ab. | | | | | | |

**Tabelle 5: Mischung C aus 80 Gewichtsprozent PA 6 und 20 Gewichtsprozent Melamincyanurat-Glaspulver-Flammhemmer-Masterbatch**

| **Stab Nr.** | **Dicke [mm]** | **t₁ [s]** | **Watte brennt** | **t₂ [s]** | **Watte brennt** | **Klassifizie rung** |
|---|---|---|---|---|---|---|
| 1 | 0,80 | 0,9 | nein | 0,4 | nein | 94 V-0 |
| 2 | 0,80 | 1,3 | nein | 1,4 | nein | |
| 3 | 0,80 | 0,6 | nein | 0,5 | nein | |
| 4 | 0,80 | 1,4 | nein | 0,8 | nein | |
| 5 | 0,80 | 0,4 | nein | 0,6 | nein | |

| | | | | | | |
|---|---|---|---|---|---|---|
| Die Proben tropfen brennend ab. | | | | | | |

## Patentansprüche

1. Flammschutzmittel für thermoplastische Formmassen, bestehend aus 30 bis 70 Gewichtsprozent amorpher poröser Glaspartikel aus Borosilikatglas, die aus im Hochtemperaturextruder erzeugtem Schaumglas durch anschließende Mahlung und Sichtung hergestellt werden, eine mittlere Partikelgröße zwischen 1 und 100 µm aufweisen und aus 30 bis 70 Gewichtsprozent Melamincyanurat, wobei das Melamincyanurat auch als äquimolare Mengen von Melamin und Cyanursäure bzw. Isocyanursäure eingesetzt werden kann und wobei die Summe der Komponenten 100 Gewichtsprozent beträgt.

2. Flammschutzmittel nach Anspruch 1, wobei die amorphen porösen Glaspartikel aus Borosilikatglas folgender Zusammensetzung bestehen: 55,0 bis 60,0 Gew.-% SiO₂; 9,5 bis 13,5 Gew.-% Na₂O; 1,0 bis 4,0 Gew.-% K₂O; 1,0 bis 5,0 Gew.-% CaO; 0 bis 2,0 Gew.-% MgO; 3,0 bis 6,0 Gew,-% BaO: 3,0 bis 5,0 Gew.-% ZnO; 8,0 bis 11,0 Gew.-% B₂O₃ und 4,0 bis 7,0 Gew,-% Al₂O₃.

3. Flammschutzmittel nach Anspruch 1, wobei die amorphen porösen Glaspartikel eine mittlere Partikelgröße zwischen 2 und 6 µm aufweisen.

4. Verwendung des Flammschutzmittels nach Anspruch 1 für thermoplastische Formmassen, welche insbesondere bestehen aus:
- 10 bis 95 Gewichtsprozent eines thermoplastischen Polymers oder eines Gemisches aus mehreren thermoplastischen Polymeren
- 10 bis 95 Gewichtsprozent eines thermoplastischen Polymers oder eines Gemisches aus mehreren thermoplastischen Polymeren
- 5 bis 60 Gewichtsprozent des Flammschutzmittels nach Anspruch 1
- 0 bis 70 Gewichtsprozent weiterer Füllstoffe- Verstärkungsstoffe, Zusatzstoffe oder Verarbeitungshilfsmittel,
wobei die Summe der Komponenten 100 Gewichtsprozent beträgt.

5. Verwendung des Flammschutzmittels gemäß Anspruch 4, wobei als Füll- und Verstärkungsstoffe bevorzugt Feldspat, Glimmer, Talkum, Quarz, Silikate, amorphe Kieselsäure, Magnesiumcarbonat, Bariumsulfat, Kohlenstofffasern, Aramidfasern, Kaliumtitanatfasern, Naturfasern, Glasfasern (Kurzfasern, Langfasern oder Endlosfasern), Glaskugeln, Glasgewebe, Glasmatten, Kaolin, Titandioxid, Wollastonit, eingesetzt werden, wobei die Füll- und Verstärkungsstoffe auch oberflächenbehandelt sein können.

6. Verwendung des Flammschutzmittel nach Anspruch 1 als Masterbatch, bestehend aus 30 bis 70 Gewichtsprozent Melamincyanurat, 30 bis 70 Gewichtsprozent der porösen amorphen Glaspartikel, 10 bis 50 Gewichtsprozent der thermoplastischen Formmassen und 0 bis 50 Gewichtsprozent weiterer Zusatzstoffe oder Verarbeitungshilfsmittel.

7. Verwendung des Flammschutzmittels gemäß Anspruch 4, wobei als Komponenten auch kautschukelastische Polymerisate enthalten sein können.

## Claims

1. A flame retardant for thermoplastic moulding compounds comprising between 30 and 70 percent by weight of amorphous porous glass particles made of borosilicate glass, said particles being manufactured from foam glass created in a high temperature extruder before being crushed and sifted, the mean particle size being between 1 and 100 µm, and comprising between 30 and 70 percent by weight melamine cyanurate, whereby the melamine cyanurate can also be used as equimolar amounts of melamine and cyanuric acid or isocyanuric acid respectively, the sum of the components amounting to 100 percent by weight.

2. A flame retardant according to Claim 1, **characterized In that** the amorphous porous glass particles being made of borosilicate glass have the following composition:
between 55.0 and 60.0 percent by weight SiO₂; between 9.5 and 13.5 percent by weight Na₂O; between 1.0 and 4.0 percent by weight K₂O; between 1.0 and 5.0 percent by weight CaO; between 0 and 2.0 percent by weight MgO; between 3.0 and 6.0 percent by weight BaO; between 3.0 and 5.0 percent by weight ZnO; between 8.0 and 11.0 percent by weight B₂O₃ and between 4.0 and 7.0 percent by weight Al₂O₃.

3. A flame retardant according to Claim 1, **characterized in that** the amorphous porous glass particles have a mean particle size of between 2 and 6 µm.

4. Use of the flame retardant according to Claim 1 for thermoplastic moulding compounds especially comprising:
- between 10 and 95 percent by weight of a thermoplastic polymer or a mixture of numerous thermoplastic polymers;
- between 5 and 60 percent by weight of the flame retardant according to Claim 1;
- between 0 and 70 percent by weight of additional fillers and reinforcing materials, additives or processing agents,
**characterized in that** the sum of the components amounts to 100 percent by weight.

5. Use of the flame retardant according to Claim 4, **characterized In that** the preferred fillers and reinforcing materials are feldspar, mica, talcum, quartz, silicates, amorphous silicic acid, magnesium carbonate, barium sulphate, carbon fibres, aramid fibres, potassium titanate fibres, natural fibres, glass fibres (short fibres, long fibres, or continuous fibres), glass spheres, glass fabrics, glass mats, kaolin, titanium dioxide, wollastonite, wherein the fillers and reinforcing materials can also be surface treated.

6. Use of the flame retardant according to Claim 1 as a masterbatch, comprising between 30 and 70 percent by weight of the melamine cyanurate, between 30 and 70 percent by weight of the porous amorphous glass particles, between 10 and 50 percent by weight of the thermoplastic moulding compounds and between 0 and 50 percent by weight of the additional additives or processing agents.

7. Use of the flame retardant according to Claim 4, **characterized in that** the component may also include elasticated rubber polymerisates.

## Revendications

1. Agent ignifuge pour les matières moulables thermoplastiques, composé à raison de 30 à 70 pour cent en poids de particules poreuses et amorphes de verre borosilicaté, qui sont fabriquées en verre cellulaire généré dans une extrudeuse à haute température par broyage et tamisage, qui présentent des particules de 1 à 100 µm et à raison de 30 à 70 pour cent en poids de mélamine cyanurate, la mélamine cyanurate pouvant également être utilisée comme quantités équimolaires de mélamine et d'acide cyanurique ou d'acide isocyanurique et la somme des composants s'élevant à 100 pour cent du poids.

2. Agent ignifuge conforme à la prétention 1, les particules poreuses et amorphes de verre étant composées de verre borosilicaté de la composition suivante : de 55,0 à 60,0 pour cent en poids de SiO₂, de 9,5 à 13,5 pour cent en poids de Na₂O ; de 1,0 à 4,0 pour cent en poids de K₂O ; de 1,0 à 5,0 pour cent en poids de CaO ; de 0 à 2,0 pour cent en poids de MgO ; de 3,0 à 6,0 pour cent en poids de BaO ; de 3,0 à 5,0 pour cent en poids de ZnO ; de 8,0 à 11,0 pour cent en poids de B₂O₃ et de 4,0 à 7,0 pour cent en poids de Al₂O₃.

3. Agent ignifuge conforme à la prétention 1, les particules poreuses et amorphes de verre présentant des particules de 2 à 6 µm.

4. Utilisation de l'agent ignifuge conforme à la prétention 1 pour les matières moulables thermoplastiques, composées notamment de :
- 10 à 95 pour cent en poids d'un polymère thermoplastique ou d'un mélange de plusieurs polymères thermoplastiques
- 10 à 95 pour cent en poids d'un polymère thermoplastique ou d'un mélange de plusieurs polymères thermoplastiques
- 5 à 60 pour cent en poids de l'agent ignifuge conformément à la prétention 1
- 0 à 70 pour cent en poids d'autres substances de charge et de renforcement, d'additifs ou de produits auxiliaires,
la somme des composants s'élevant à 100 pour cent en poids.

5. Utilisation de l'agent ignifuge conforme à la prétention 4, en préférant l'utilisation des substances de charge et de renforcement que sont le feldspath, le mica, le talc, le quartz, le silicate, l'acide silique amorphe, le carbonate de magnésium, le sulfate de baryum, les fibres de carbone, les fibres d'Aramide, les fibres de titanate de potassium, les fibres naturelles, les fibres de verre (fibres broyées, les fibres longues ou les filaments), les sphères de verre, les tissus de verre, les mats de fibres de verre, le kaolin, le dioxyde de titane ou la wollastonite, les substances de charge et de renforcement pouvant également être traitées en surface.

6. Utilisation de l'agent Ignifuge conforme à la prétention 1 comme mélange maître, composé à raison de 30 à 70 pour cent en poids de mélanine cyanurate, de 30 à 70 pour cent en poids de particules de verre amorphes et poreuses, de 10 à 50 pour cent en poids de matières moulables thermoplastiques et de 0 à 50 pour cent en poids d'autres additifs ou d'autres produits auxiliaires.

7. Utilisation de l'agent ignifuge conforme à la prétention 4, des polymères élastiques/caoutchouteux pouvant également être contenus comme composants.
